# EUROPÄISCHE PATENTSCHRIFT

(11) **EP 4 018 783 B1**
(45) Veröffentlichungstag und Bekanntmachung des Hinweises auf die Patenterteilung: **02.08.2023**
(21) Anmeldenummer: 20753911.5
(22) Anmeldetag: 05.08.2020
(51) Int. Cl.: H05B 6/62, H05B 6/12, H05B 3/74, F24C 15/18

(54) **GARGERÄT MIT PEF-GENERATOR, PEF-SYSTEM UND VERFAHREN**
COOKING APPLIANCE HAVING A PEF GENERATOR, PEF SYSTEM AND METHOD
APPAREIL DE CUISSON AYANT UN GÉNÉRATEUR DE CHAMP ÉLECTRIQUE PULSÉ ET SYSTÈME ET PROCÉDÉ DE CHAMP ÉLECTRIQUE PULSÉ

(30) Priorität: 21.08.2019 DE 102019212485
(43) Veröffentlichungstag der Anmeldung: 29.06.2022
(73) Patentinhaber: BSH Hausgeräte GmbH, 81739 München (DE)
(72) Erfinder: HUBER, Andreas, 83301 Traunreut (DE)
(86) Internationale Anmeldenummer: PCT/EP2020/071989
(87) Internationale Veröffentlichungsnummer: WO 2021/032479

(56) Entgegenhaltungen:
- EP-A1- 3 503 678
- WO-A1-2012/125021
- WO-A1-2016/008868
- DE-A1-102014 201 422
- US-A- 5 549 041

## Beschreibung

Die Erfindung betrifft ein Gargerät mit einem PEF-Generator und einer Aufnahme für mindestens einen PEF-Behälter. Die Erfindung betrifft auch ein System mit dem Gargerät und mindestens einem in die Aufnahme eingesetzten PEF-Behälter. Die Erfindung betrifft ferner ein Verfahren zum PEF-Behandeln von Gargut. Die Erfindung ist insbesondere vorteilhaft anwendbar auf Gargeräte, die ein Kochfeld aufweisen.

Eine bislang kommerziell in der Lebensmittelindustrie angewandte Methode zur Energiezufuhr in Lebensmittel beruht auf der Erzeugung gepulster elektrischer Gleichfelder ("Pulsed Electric Fields"; PEF) am Ort der Lebensmittel. Hierbei werden Lebensmittel alternierenden elektrischen Feldern mit einer Pulsdauer von z.B. bis zu einigen 10 Mikrosekunden ausgesetzt. Diese alternierenden Felder bewirken durch die Lebensmittel fließende alternierende Stromstöße, welche eine ohmsche Verlustleistung in die Lebensmittel einbringen und dadurch eine ohmsche Erwärmung der Lebensmittel bewirken. Auch werden in den Lebensmitteln kapazitive Verschiebeströme erzeugt, die sehr große Werte annehmen können. Diese Verschiebeströme bewirken eine gewisse Entkeimung der Lebensmittel und erinnern in ihrer Wirkung auf das Lebensmittel an den Vorgang des Pasteurisierens.

Bei nichtflüssigen bzw. stückigen Lebensmitteln werden die Zwischenräume zwischen ihnen mit Wasser aufgefüllt. Dem Wasser wird hierbei so viel Salz zugesetzt, dass die elektrische Leitfähigkeit des Wassers der elektrischen Leitfähigkeit des Lebensmittels zumindest ungefähr entspricht.

Aus der WO 2012/125021 A1 ist ein System zur Behandlung eines Lebensmittels durch PEF-Technologie bekannt. Das System weist einen Behandlungstopf und eine Kopplungsstation eines PEF-Generators, welche zur Aufnahme des Behandlungstopfes ausgelegt ist, auf.

WO 2016/008868 A1 offenbart ein Verfahren zum Kochen eines Lebensmittels in einer Behandlungskammer. Die Behandlungskammer umfasst zwei gegenüberliegende Wände, welche jeweils eine Elektrode aufweisen. Zwischen den Elektroden wird das Lebensmittel platziert. Die Elektroden werden mit elektrischen Impulsen eines Feldgenerators beaufsch lagt.

Die EP 3 503 678 A1 beschreibt ein Kochgerät, welches auf Basis eines gepulsten elektrischen Feldes arbeitet. Das Kochgerät weist einen Behälter mit einer starren ersten Elektrode und mit einer beweglichen zweiten Elektrode auf.

Aus der DE 10 2014 201 422 A1 ist ein Gargerät zum Garen von Gargut bekannt. Das Gargerät weist einen Hochfrequenzgenerator zum Erzeugen eines hochfrequenten Wechselstromes auf, der mit zwei Kontaktflächen des Gargerätes gekoppelt ist.

Die US 5 549 041 A offenbart ein Gerät zur Lebensmittelbehandlung mit gepulsten elektrischen Feldern.

WO 2011/139144 A1 offenbart ein Verfahren und ein System zum Behandeln eines im Wesentlichen festen Nahrungsmittelprodukts, bei dem ein Zellaufschluss des Nahrungsmittelprodukts auftritt und der notwendige Temperaturanstieg aufgebaut wird, der für die Verarbeitung von Makronährstoffen erforderlich ist. Das System umfasst Mittel, die angeordnet sind, um das Lebensmittelprodukt einem gepulsten elektrischen Feld zur Zerstörung der Zellen des Lebensmittelprodukts und zur Verarbeitung der Makronährstoffe zu unterwerfen, wodurch es für den beabsichtigten Verbrauch und die effiziente Verdauung zubereitet wird.

DE 10 2010 028 780 A1 stellt eine Vorrichtung und ein Verfahren zum satzweisen Erwärmen von Lebensmitteln bereit, insbesondere von Fleisch- und Wurstwaren, die wahlweise in einer elektrisch leitfähigen Hülle angeordnet sein können, in einer Kammer, die zwei beabstandete, mit elektrischer Spannung beaufschlagbare Elektroden aufweist, wobei die elektrische Spannung Wechselspannung bei einer Frequenz von 500 Hz bis 10 MHz ist oder Pulsspannung aus bipolaren, gleichstromfreien Impulsen mit Pulsbreiten bzw. Pulsdauern von 50 ns bis 1 ms.

WO 2015/005793 A1 offenbart ein Verfahren zum chargenweisen Garen eines Lebensmittelprodukts in einer Behandlungskammer, wobei die Behandlungskammer zwei gegenüberliegende Seitenwände aufweist, die jeweils eine Elektrode bilden, wobei jede Elektrode einen Winkel mit der vertikalen Ebene von höchstens 45 ° aufweist, wobei das Verfahren die folgende Schritte umfasst: (1) Einbringen einer Menge des Lebensmittelprodukts, gegebenenfalls in eine umgebende Flüssigkeit, in die Behandlungskammer zwischen den beiden Elektroden, so dass das Lebensmittelprodukt und/oder die umgebende Flüssigkeit in direktem Kontakt mit den Elektroden stehen; und (2) Anlegen von elektrischen Impulsen, die von einem Generator für gepulste elektrische Felder erzeugt werden, an die Elektroden, so dass das Lebensmittelprodukt einem gepulsten elektrischen Feld mit einer Feldstärke im Bereich von 10 V/cm bis 10 kV/cm ausgesetzt wird, wobei die Zahl von Impulsen im Bereich von 1 bis 2.000.000 liegt und die Impulse jeweils eine Dauer im Bereich von 1 bis 20.000 µs aufweisen, wobei das Lebensmittelprodukt und, falls vorhanden, die umgebende Flüssigkeit eine elektrische Leitfähigkeit im Bereich von 0,01 bis 10 S/m aufweist.

Es ist die **Aufgabe** der vorliegenden Erfindung, einem Nutzer eine besonders nutzerfreundliche Möglichkeit zur Nutzung eines PEF-Geräts zur Zubereitung von Gargut bereitzustellen.

Diese Aufgabe wird gemäß den Merkmalen der unabhängigen Ansprüche gelöst. Vorteilhafte Ausführungsformen sind Gegenstand der abhängigen Ansprüche, der Beschreibung und der Zeichnungen.

Die Aufgabe wird gelöst durch ein Gargerät, aufweisend ein Kochfeld mit mindestens einer Energieübertragungseinheit zum Übertragen von Energie auf ein auf dem Kochfeld aufgesetztes Aufsatzgerät und mit mindestens einer PEF-Gareinrichtung, wobei die mindestens eine PEF-Gareinrichtung aufweist:
- mindestens einen PEF-Generator und
- mindestens eine von einer Oberseite des Kochfelds zugängliche Aufnahme, die zum Einsatz mindestens eines PEF-Behälters eingerichtet ist,
   wobei
- jede Aufnahme mindestens einen an den PEF-Generator angeschlossenen Anschlusskontakt zur elektrischen Verbindung mit mindestens einem darin eingesetzten PEF-Behälter aufweist.

Das Gargerät umfasst also ein Kochfeld mit darin integrierter PEF-Gareinrichtung. Das vorliegende Gargerät nutzt die Erkenntnis, dass mittels der PEF-Methode Gargut in Wasser erhitzt und damit gegart werden kann. Somit kann mittels der PEF-Methode keine Bräunung des Garguts oder andere Behandlungsart erreicht werden. Durch die Integration der PEF-Gareinrichtung in das Kochfeld wird nun die Möglichkeit geschaffen, zuvor PEF-gegartes Gargut mit anderen, durch das Kochfeld bzw. den daran verwendbaren Aufsatzgeräten bereitgestellten Methoden weiterzubehandeln. So kann eine gewünschte Bräunung von zuvor PEF-gegartem Gargut durch Anbraten mittels eines Aufsatzgeräts wie einem Kochgeschirr (z.B. einer Pfanne oder Topf) oder einer Grillplatte mit den üblichen Mitteln eines Kochfelds erreicht werden. Da die Arbeitsschritte Garen und Bräunen in unmittelbarer Nähe zueinander ausgeführt werden, ergeben sich kurze Wege für einen Nutzer, was wiederum eine Nutzerzufriedenheit erhöht. Dazu trägt auch bei, dass PEF-Behälter zum Durchführen der PEF-Methode im Bereich der Kochplatte handgehabt werden, insbesondere neben durch die Energieübertragungseinheit(en) definierten Kochstellen. Die Aufgabe kann ganz allgemein auch durch ein Kochfeld gelöst werden, in dem eine PEF-Gareinrichtung integriert ist.

Es ist eine Weiterbildung, dass das Gargerät ein Haushaltsgerät ist. Es kann ein Einbaugerät sein. Das Gargerät kann ein eigenständiges Kochfeld aufweisen oder sein oder als eine Backofen/Kochfeld-Kombination ("Herd") vorliegen. Das Kochfeld kann oberseitig eine Glaskeramikplatte aufweisen.

Die mindestens eine Energieübertragungseinheit ist dazu vorgesehen oder eingerichtet (d.h., ausgestaltet und angeordnet), Energie auf ein auf dem Kochfeld aufgesetztes Aufsatzgerät zu übertragen. Die mindestens eine Energieübertragungseinheit kann beispielsweise aufweisen:
- mindestens einen Strahlungsheizkörper, z.B. einen elektrischen Widerstandsheizleiter ("Strahlungskochfeld"), der Energie in Form von Wärmestrahlung abgibt;
- mindestens eine Spule zum Erzeugen von Wirbelströmen in dem Aufsatzgerät ("Induktionskochfeld");
- mindestens eine Spule zur transformatorischen Kopplung mit einem elektrisch betreibbaren Aufsatzgerät ("Transformationskochfeld").

Das Aufsatzgerät kann jegliches durch Aufsatz auf das Kochfeld und mittels des Kochfelds betreibbares Zubehör sein, beispielsweise Kochgeschirr (z.B. ein Topf, eine Pfanne, ein Bräter usw.), eine Grillplatte, usw. sein.

Die PEF-Gareinrichtung dient dazu, Gargut mittels der PEF-Methode zu garen. Die PEF-Methode ist grundsätzlich bekannt und wird deshalb hier nicht weiter ausgeführt.

Das Gargut kann insbesondere Lebensmittel umfassen. Lebensmittel umfasst hierbei grundsätzlich alle Arten tierischer oder pflanzlicher Lebensmittel, insbesondere alle Arten von Obst, Gemüse, Fleisch, Fisch oder Geflügel, und zwar auch unabhängig davon, ob die Lebensmittel zu Beginn der Zubereitung roh oder vorverarbeitet vorliegen. Weitere Lebensmittel wie Eierspeisen, Getreide, Reis, Nudeln usw. können auch mittels der PEF-Gareinrichtung zubereitet werden.

Der PEF-Generator erzeugt gepulste elektrische Signale ("PEF-Signale"), die an den mindestens einen Anschlusskontakt der Aufnahme anlegbar sind. Der an den PEF-Generator angeschlossene mindestens ein Anschlusskontakt ist insbesondere mit einem Signalausgang des PEF-Generators verbunden. Weist der PEF-Generator mehrere Signalausgänge auf, können diese in einer Weiterbildung individuell ansteuerbar sein. Ein Signalausgang kann mit einer oder mit mehreren Anschlusskontakten verbunden sein.

Es ist eine Weiterbildung, dass der PEF-Generator eine Steuerungs- und Leistungselektronik aufweist. Dabei können die Steuerungselektronik und die Leistungselektronik getrennt angeordnet sein oder in einer Elektronikeinheit integriert sein. Der Steuerungselektronik und/oder der Leistungselektronik können ein oder mehrere Lüfter zu deren Kühlung zugeordnet.

Es ist eine Weiterbildung, dass die Aufnahme eine oberseitige Öffnung zum Einsatz mindestens eines PEF-Behälters aufweist. Diese Öffnung wird insbesondere durch einen Ausschnitt in der Kochfeldplatte, z.B. Glaskeramikplatte, gebildet. Die Aufnahme befindet sich also insbesondere neben der mindestens einen durch die mindestens eine Energieübertragungseinheit definierten Kochstelle, bei vier Kochstellen beispielsweise mittig dazu.

Eine Aufnahme kann zum Einsatz oder Unterbringung eines oder mehrerer PEF-Behälter eingerichtet oder vorgesehen sein. Ein Gargerät kann eine oder mehrere Aufnahmen aufweisen.

Es ist eine Ausgestaltung, dass mindestens ein Anschlusskontakt an den PEF-Generator angeschlossen ist. Dies ermöglicht vorteilhafterweise ein Betreiben mindestens einer PEF-Elektrode eines eingesetzten PEF-Behälters mit PEF-Signal, wie weiter unten genauer ausgeführt wird.

Es ist eine Ausgestaltung, dass mehrere Anschlusskontakte an den PEF-Generator angeschlossen sind. Es kann also auch der weitere oder andere Anschlusskontakt an den PEF-Generator angeschlossen sein. Dazu sind insbesondere mindestens zwei Anschlusskontakte an unterschiedliche Signalausgänge des PEF-Generators angeschlossen. Durch diese Ausgestaltung wird der Vorteil erreicht, dass sich der PEF-Behälter auch erdungsfrei betreiben lässt. Ein weiterer Vorteil besteht darin, dass, insbesondere bei gegenpoligem oder gegenläufigen Betrieb, geringere Spannungshöhen erzeugt zu werden brauchen als in der geerdeten Variante: wird beispielsweise in der geerdeten Variante ein PEF-Signal oder PEF-Puls mit einer Amplitude von 1000 V erzeugt, brauchen in der mit gegenläufigen PEF-Signalen betriebenen Variante zur Erzeugung des gleichen Effekts nur zwei PEF-Signale mit +500 V und -500 V erzeugt und an unterschiedliche Anschlusskontakte angelegt zu werden, das den gerätetechnischen Aufwand verringern kann.

Es ist eine Ausgestaltung, dass zumindest eine, speziell jede, Aufnahme mindestens einen weiteren, auf Masse bzw. einem Bezugspotenzial liegenden Kontakt zum elektrischen Anschluss mindestens eines darin eingesetzten PEF-Behälters aufweist. Insbesondere kann also jede Aufnahme mindestens zwei Anschlusskontakte zum elektrischen Anschluss mindestens eines darin eingesetzten PEF-Behälters aufweisen, von denen mindestens ein Anschlusskontakt an einen Signalausgang des PEF-Generators angeschlossen ist und mindestens ein anderer Anschlusskontakt an Masse angeschlossen ist. Insbesondere kann jede Aufnahme zur Aufnahme eines PEF-Behälters jeweils zwei Anschlusskontakte aufweisen. Die Anschlusskontakte können in einer gemeinsamen Kontakteinheit integriert sein, z.B. in einem Verbindungsstecker. Alternativ können die Anschlusskontakte separat angeordnet sein.

Allgemein dienen die Anschlusskontakte der Aufnahme dazu, mit entsprechenden Gegenkontakten eines in die Aufnahme eingesetzten PEF-Behälters elektrisch verbunden zu werden, wobei die Gegenkontakte wiederum jeweils mit einer oder mehreren PEF-Elektroden elektrisch verbunden sind. Bei eingesetztem PEF-Behälter ist also mindestens eine PEF-Elektrode über ein Kontaktpaar aus Anschlusskontakt und Gegenkontakt mit einem Signalausgang des PEF-Generators verbunden. Mindestens eine andere PEF-Elektrode ist über ein anderes Kontaktpaar aus Anschlusskontakt und Gegenkontakt mit Masse oder mit dem PEF-Generator verbunden.

Es ist eine Ausgestaltung, dass die Aufnahme über einen Ablauf mit einem Auffangbehälter oder Sammelbehälter verbunden ist. Dies ergibt den Vorteil, dass aus dem PEF-Behälter überlaufende Flüssigkeit, in der Aufnahme gebildetes Kondensat usw. aus der Aufnahme ablaufen kann. Der Auffangbehälter kann in einer Weiterbildung zur Reinigung und/oder Entleerung entnehmbar sein. Es ist eine Weiterbildung, dass der Auffangbehälter unterhalb oder an einer Unterseite des Kochfelds angeordnet ist. Dadurch wird für den Auffangbehälter kein Platz nahe der Oberseite benötigt, der Aufnahmebehälter kann großvolumig / hoch ausgebildet sein und er kann besonders einfach entnommen werden. Es ist eine Weiterbildung, dass der Ablauf an seinem oberen Ende in einen Boden der Aufnahme mündet, insbesondere in dessen tiefstem Bereich, insbesondere bei leicht schrägem (z.B. trichterförmigem) Bodenverlauf.

Es ist eine Weiterbildung, dass die Aufnahme mit einem über einen Ablauf mit einem Abfluss verbunden ist bzw. an einen Abfluss angeschlossen ist. So wird der Vorteil erreicht, dass die aus dem PEF-Behälter überlaufende Flüssigkeit und das in der Aufnahme gebildete Kondensat direkt in einen Ablauf gelangt und nicht mehr durch einen Nutzer entsorgt zu werden braucht.

Es ist eine Ausgestaltung, dass das Gargerät mindestens einen Deckel zur oberseitigen Abdeckung mindestens einer Aufnahme aufweist. Der mindestens einen Deckel dient der Betriebssicherheit, z.B. um eine Berührung der Anschlusskontakte und/oder PEF-Elektroden während des Betriebs des PEF-Generators zu verhindern. Insbesondere kann jede Aufnahme mittels genau eines Deckels abdeckbar sein. Der Deckel kann bezüglich der Kochplatte verschwenkbar an dem Gargerät befestigt sein. Der Deckel kann insbesondere zumindest geräteseitig oder automatisch öffenbar sein. Er kann geräteseitig und/oder manuell verschließbar sein. Der Deckel kann als Teil oder Komponente der Aufnahme angesehen werden.

Es ist eine Ausgestaltung, dass das Gargerät dazu eingerichtet ist, einen geschlossenen Zustand des Deckels bzw. dessen Schließzustand zu detektieren und den zugehörigen mindestens einen PEF-Generator nur bei geschlossenem Deckel zu aktivieren. So wird eine besonders hohe Bediensicherheit erreicht. Das Aktivieren des PEF-Generators kann ein Versorgen des PEF-Generators mit elektrischer Leistung umfassen. Das Gargerät kann dazu eine Überwachungseinrichtung aufweisen, die detektiert, ob der Deckel geschlossen ist. Die Überwachungseinrichtung kann z.B. mindestens einen elektrischen Kontakt, einen mechanisch betätigbaren Kontakt- oder Mikroschalter, eine Lichtschranke usw. umfassen. Speziell die Nutzung eines mechanisch betätigbaren Kontaktschalters ermöglicht eine zuverlässige, kompakte und kostengünstige Umsetzung.

Es ist eine Weiterbildung, dass eine PEF-Elektrode in den Deckel integriert ist. Diese kann so ausgestaltet sein, dass sie im geschlossenen Zustand in einen Garraum des Garbehälters ragt. Diese PEF-Elektrode kann an den PEF-Generator angeschlossen sein oder geerdet sein. In einer Variante kann die PEF-Elektrode des Deckels dauerhaft mit dem PEF-Generator verbunden sein, während der in der Aufnahme bereitgestellte Anschlusskontakt auf dem Bezugspotenzial liegt oder mit dem PEF-Generator verbunden ist.

Es ist jedoch auch der Fall möglich, dass die in den Deckel integrierte PEF-Elektrode geerdet ist.

Es ist eine Weiterbildung, dass das Gargerät dazu eingerichtet ist, einen eingesetzten PEF-Behälter zu detektieren. Das Gargerät kann dazu eine (weitere) Überwachungseinrichtung aufweisen, die detektiert, wenn ein PEF-Behälter korrekt eingesetzt ist. Die Überwachungseinrichtung kann z.B. mindestens einen elektrischen Kontakt umfassen, der beispielsweise einen elektrischen Anschluss von elektrischen Kontakten des PEF-Behälters an die zugehörigen Anschlusskontakte der Aufnahme detektieren kann. Es ist eine Weiterbildung, dass das Gargerät dazu eingerichtet ist, den zugehörigen mindestens einen PEF-Generator nur bei eingesetztem PEF-Behälter zu aktivieren, insbesondere mit Leistung zu versorgen. So wird eine besonders hohe Bediensicherheit erreicht.

Es ist eine Ausgestaltung, dass die Aufnahme mit einer Wrasenabfuhreinrichtung verbunden ist. So wird der Vorteil erreicht, dass sich während eines PEF-Garens eine geringere Menge an Wasserdampf oder Wrasen in der Aufnahme hält, so dass dort auch weniger Wasserdampf/Wrasen kondensiert und, falls die Aufnahme nicht dampfdicht gegenüber dem Kochfeld abgedichtet ist, zudem mit konstruktiv einfachen Mitteln verhindert werden kann, dass sich Wasserdampf/Wrasen innerhalb des Kochfelds ausbreiten kann.

Es ist eine Ausgestaltung, dass die Wrasenabfuhreinrichtung mindestens einen Lüfter zum Einblasen von Luft in die Aufnahme aufweist. Diese Luft entweicht dann wieder aus der Aufnahme und nimmt dabei den Dampf (Wasserdampf oder Wrasen) mit.

Es ist eine Ausgestaltung, dass in dem Deckel und/oder in einem Spalt zwischen dem Deckel und dem oberseitigen Rand der Aufnahme mindestens eine Dampfauslassöffnung vorhanden sind. Der Dampf (Wasserdampf oder Wrasen) wird dann durch diese Durchauslassöffnungen aus der Aufnahme ausgeblasen. Diese Ausgestaltung weist den Vorteil auf, dass sie besonders platzsparend und kostengünstig umsetzbar ist und zudem ein Nutzer während des PEF-Garens durch den oberseitig aus dem Kochfeld austretenden Dampf den Garvorgang auch optisch nachvollziehen kann. Jedoch kann alternativ auch mindestens ein Ausblaskanal in die Ausnahme münden, durch welchen der Dampf aus der Aufnahme austreten kann.

Es ist eine Ausgestaltung, dass mittels des Lüfters zunächst Luft über eine Elektronik zu deren Kühlung leitbar ist und dann in die Aufnahme einblasbar ist. Der zum Ausblasen des Dampfs aus der Aufnahme verwendete Lüfter ist also auch ein Elektroniklüfter. So wird der Vorteil erreicht, dass der Lüfter für mehrere Funktionen nutzbar ist und damit kein gesonderter Entlüftungslüfter mehr benötigt wird. Dies wiederum spart Bauraum und Kosten.

Es ist eine Ausgestaltung, dass die Wrasenabfuhreinrichtung mindestens einen Lüfter zum Absaugen von Wrasen aus der Aufnahme aufweist. Dadurch wird der Vorteil erreicht, dass Dampf in der Aufnahme besonders effektiv entfernbar ist, und zwar ggf. auch so, dass ein Austritt von Dampf aus der Oberseite der Aufnahme bzw. des Kochfelds vermieden wird. Dadurch kann das PEF-Garen für einen Nutzer besonders unauffällig durchgeführt werden. Beispielsweise kann der Dampf gezielt nach unten abgesaugt werden.

Es ist eine Ausgestaltung, dass eine Leistungselektronik des mindestens einen PEF-Generators und ein Kühllüfter zum Kühlen der Leistungselektronik in dem Gargerät angeordnet sind. So wird der Vorteil erreicht, dass eine Überhitzung der Leistungselektronik vermieden werden kann. Insbesondere kann die Leistungselektronik zusammen mit dem Kühllüfter in einem Gehäuse des Kochfelds verbaut sein. So wird eine besonders kompakte Bauweise bei effizienter Signalführung ermöglicht.

Es ist eine Weiterbildung, dass der Kühllüfter sowohl zum Kühlen der Leistungselektronik des mindestens einen PEF-Generators als auch dazu vorgesehen ist, Luft in die Aufnahme zu drücken.

Es ist eine Weiterbildung, dass eine Steuerung der PEF-Gareinrichtung in eine Steuerung des Kochfeldes integriert ist, z.B. über eine einheitliche Nutzersteuerung, insbesondere Menüführung. Dadurch wird der Vorteil eines durchgängigen Bedienkonzepts erreicht.

Es ist eine Weiterbildung, dass in dem Signalpfad zwischen dem PEF-Generator und der mindestens einen PEF-Elektrode ein Strombegrenzer angeordnet ist. Dies vermeidet Überströme in der PEF-Elektrode besonders zuverlässig und erhöht eine Betriebssicherheit.

Die Aufgabe wird auch gelöst durch ein System ("PEF-System"), aufweisend ein Gargerät wie oben beschrieben und mindestens in einen zum Einsatz eine Aufnahme der PEF-Gareinrichtung des Gargeräts eingerichteten PEF-Behälter. Das PEF-System kann analog zu dem Gargerät ausgebildet werden und weist die gleichen Vorteile auf.

Es ist eine Ausgestaltung, dass der PEF-Behälter mindestens einen zu dem mindestens einen Anschlusskontakt der Aufnahme passenden Gegenkontakt aufweist, der mit mindestens einer PEF-Elektrode des PEF-Behälters aus einer Gruppe mehrerer PEF-Elektroden elektrisch verbunden ist, und die PEF-Elektroden seitlich eines Garraums des PEF-Behälters zur Unterbringung von Gargut und in Bezug auf den Garraum gegenüberliegend angeordnet sind. Der Garraum befindet sich also zwischen mindestens zwei sich gegenüberliegend angeordneten PEF-Elektroden. Die PEF-Elektroden können beispielsweise vorderseitig und rückseitig, linksseitig und rechtsseitig und/oder oberseitig und unterseitig des Garraums angeordnet sein. Bei oberseitiger Anordnung kann eine PEF-Elektrode beispielsweise in einen Deckel des PEF-Behälters oder sogar in dem Deckel der Aufnahme integriert sein. Mindestens eine PEF-Elektrode kann auch in den Garraum hineinragen.

Es ist eine Ausgestaltung, dass der PEF-Behälter mindestens zwei zu Anschlusskontakten der Aufnahme passende Gegenkontakte aufweist, die mit jeweiligen PEF-Elektroden des PEF-Behälters elektrisch verbunden sind.

Es ist eine Ausgestaltung, dass eine PEF-Elektrode in den Deckel der Aufnahme integriert ist und der PEF-Behälter eine bodenseitige PEF-Elektrode aufweist. Die in den Deckel integrierte PEF-Elektrode kann an den PEF-Generator angeschlossen sein, während die bodenseitige PEF-Elektrode des PEF-Behälters geerdet ist, oder umgekehrt.

An zumindest eine PEF-Elektrode eines Paars sich gegenüberliegender PEF-Elektroden ist ein durch den PEF-Generator erzeugtes gepulstes elektrisches Signal anlegbar. Die andere PEF-Elektrode des Paars kann ebenfalls an den PEF-Generator angeschlossen sein oder z.B. an Masse bzw. ein Bezugspotenzial angeschlossen sein. Eine PEF-Elektrode bildet mit der ihr gegenüberliegenden Elektrode (PEF-Elektrode oder geerdeten Elektrode) insbesondere Platten eines Kondensators, mittels derer ein PEF-Feld in dem Garraum erzeugbar ist und zwischen denen das Gargut zum PEF-Garen platziert ist.

Bei Einsetzen des PEF-Behälters in die Aufnahme kontaktieren sich die Anschlusskontakte der Aufnahme und die Gegenkontakte des PEF-Behälters automatisch. Sie lösen sich auch automatisch bei Herausnahme des PEF-Behälters. Die Anschlusskontakte der Aufnahme und die passenden Gegenkontakte des PEF-Behälters können beispielsweise als Steckkontakte ausgebildet sein.

Es ist eine Weiterbildung, dass der PEF-Behälter ein schalenförmiger Behälter ist.

Der PEF-Behälter kann insbesondere mindestens einen elektrisch leitfähigen Wandbereich aufweisen, der als eine PEF-Elektrode dient, was eine Effektivität der Lebensmittelbehandlung erhöht. Insbesondere kann ein solcher Wandbereich aus Edelstahl bestehen, was einen besonders wartungsarmen und langlebigen Aufbau ermöglicht. Die übrigen Bereiche der Wandung bestehen vorteilhafterweise aus einem elektrisch isolierenden Material, z.B. aus elektrisch isolierendem Kunststoff, um verschiedene PEF-Elektrode gegeneinander zu isolieren.

Der PEF-Behälter kann ferner mindestens einen Handhabungsbereich aufweisen, der speziell dazu vorgesehen oder eingerichtet ist, eine Handhabung des PEF-Behälters zu erleichtern oder zu ermöglichen. Beispielsweise kann ein Handhabungsbereich als Griffbereich zum Ergreifen durch einen Nutzer ausgebildet sein, z.B. als Grifflasche, Bügel, usw. Ein Handhabungsbereich kann aber auch zum Eingriff eines nutzergeführten Werkzeugs eingerichtet sein, z.B. zum lösbaren Befestigen eines Handgriffs.

Für den Fall, dass die PEF-Gareinrichtung gleichzeitig mehrere PEF-Behälter aufnehmen kann und die unterschiedlichen PEF-Behältern zugeordneten PEF-Elektroden individuell ansteuerbar oder betreibbar sind, ergibt sich der Vorteil, dass in den einzelnen Aufbewahrungsbehältern verschiedene Behandlungsabläufe oder Regimes (z.B. umfassend unterschiedliche Betriebseinstellungen, Zeitdauern usw.) gefahren werden können. Mithin ist eine gleichzeitige Zubereitung auch sehr verschiedener Lebensmittel möglich. Dies wiederum erleichtert oder verbessert eine Nutzerfreundlichkeit des Geräts.

Es ist eine Weiterbildung, dass können die PEF-Gareinrichtung, der PEF-Behälter oder beide mindestens einen Sensor zum Abfühlen mindestens einer Eigenschaft des Garguts umfasst. Dadurch wird vorteilhafterweise eine Überwachung des Lebensmittels ermöglicht, was eine Gelingsicherheit verbessert.

Der mindestens eine Sensor kann z.B. mindestens einen Temperatursensor zum Abfühlen eines Temperatur des Lebensmittels umfassen. Dazu kann die Temperatur direkt erfasst werden oder indirekt über einer Erfassung der Temperatur des PEF-Behälters. Ein Temperatursensor kann ein Kontaktsensor sein, z.B. ein Thermoelement, oder ein kontaktlos messender Sensor sein, z.B. ein Pyrometer, ein Thermopile, usw. sein.

Der mindestens eine Sensor kann alternativ oder zusätzlich mindestens einen Leitfähigkeitssensor zur Messung der elektrischen Leitfähigkeit des Garguts bzw. der Flüssigkeit in dem PEF-Behälter umfassen.

Es ist eine Ausgestaltung, dass die Schublade mindestens einen Sensor zum Abfühlen von bei PEF-Behandlung erzeugten Feldern, Spannungen und/oder Strömen in dem Lebensmittel umfasst. Dadurch wird Betriebssicherheit und/oder Gelingsicherheit verbessert. Dies kann ein Abfühlen einer Form der Spannungspulse und/oder der Strompulse umfassen. Unter einer Form kann beispielsweise eine Höhe der Pulse, eine Steilheit der steigenden und/oder der fallenden Flanken der Pulse und/oder eine Dauer der Pulse verstanden werden.

Auch können die PEF-Gareinrichtung, der PEF-Behälter oder beide mindestens einen Aktor zur nicht-elektrischen Behandlung des Lebensmittels aufweisen. So kann die Gelingsicherheit weiter verbessert werden. In einer Weiterbildung umfasst der mindestens eine Aktor einen Rührer, mittels dessen der Inhalt des PEF-Behälters in Bewegung setzbar ist. So kann vorteilhafterweise eine Bildung von Gasblasen im PEF-Behälter vermieden werden und/oder eine Temperatur in dem Gargut vergleichmäßigt werden. Der Rührer kann beispielsweise ein mechanischer angetriebener, z.B. kreisender, Rührer, ein vibrierend angetriebener Rührer oder ein Ultraschallrührer sein.

Die Aufgabe wird auch gelöst durch ein Verfahren zum PEF-Behandeln von Lebensmitteln mittels eines Gargeräts und/oder Systems wie oben beschrieben. Das Verfahren kann analog zu dem PEF-System und/oder Gargerät ausgebildet werden und weist die gleichen Vorteile auf.

Es ist eine Weiterbildung, dass nach - z.B. nutzerseitigem oder programmgesteuerten - Aktivieren eines PEF-Garablaufs überprüft wird, ob ein PEF-Behälter in einer Aufnahme eingesetzt ist und/oder der Deckel der Aufnahme geschlossen ist, und, falls dies der Fall ist, der PEF-Generator zur Ausgabe von PEF-Signalen aktiviert oder betrieben wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt in Draufsicht eine Skizze eines Kochfelds mit einer darin integrierten PEF-Gareinrichtung;
- Fig.2: zeigt das Kochfeld mit PEF-Gareinrichtung als Schnittdarstellung in Vorderansicht;
- Fig.3: zeigt das Kochfeld mit PEF-Gareinrichtung als Schnittdarstellung in Seitenansicht; und
- Fig.4: zeigt ein mögliches Ersatzschaltbild einer Schaltung zur PEF-Behandlung von Gargut mittels einer in ein Kochfeld integrierten PEF-Gareinrichtung.

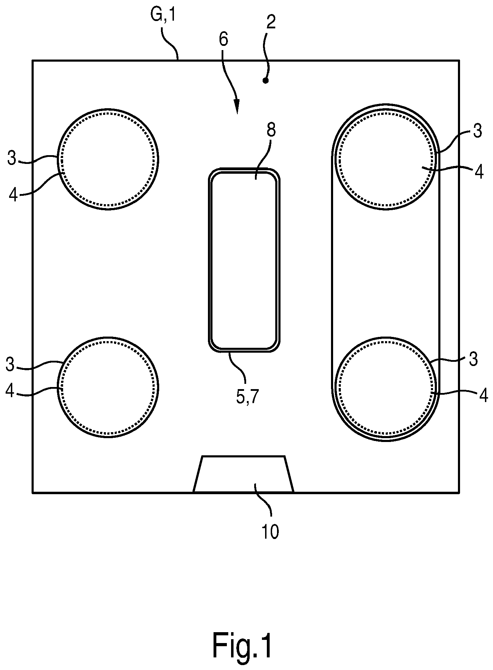

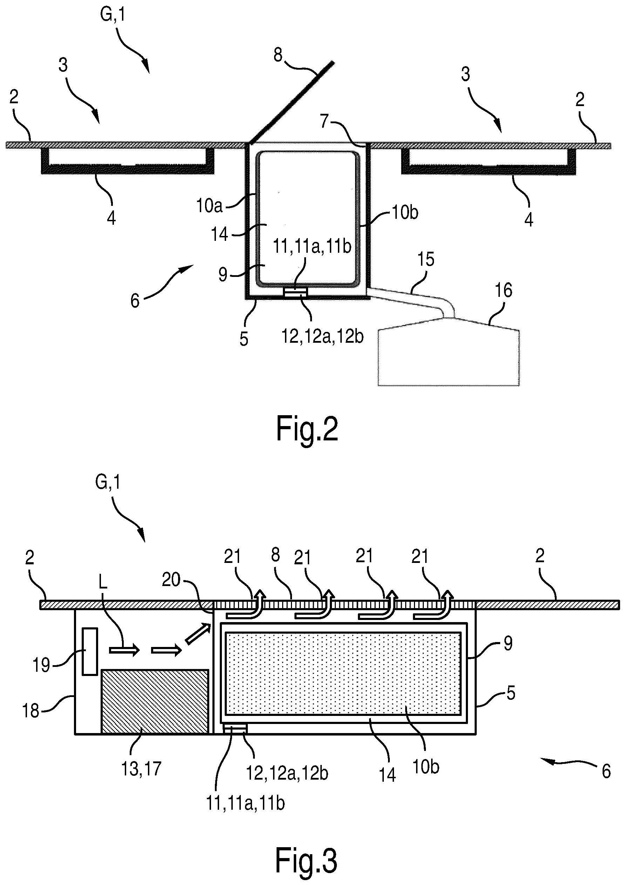

**Fig.1** zeigt in Draufsicht eine Skizze eines Gargeräts G mit einem Kochfeld 1 mit oberseitiger Glaskeramikplatte 2 und mehreren (hier: vier) Kochstellen 3. Unterhalb der Kochstellen 3 sind jeweils eine Energieübertragungseinheit 4 in Form eines Strahlungsheizkörpers oder einer Induktionsspule angeordnet. Ungefähr mittig zwischen den Kochstellen 3 befindet sich eine oberseitig zugängliche Aufnahme 5 einer PEF-Gareinrichtung 6. Dazu weist die Glaskeramikplatte 2 im Bereich der Aufnahme 5 einen Ausschnitt 7 auf, der mittels eines Deckels 8 abdeckbar ist. Der Deckel 8 kann verschwenkbar gelagert sein. Befindet sich der Deckel 8 in seiner Öffnungsstellung, kann die Aufnahme 5 durch den Ausschnitt 7 mit einem oder mehreren PEF-Behältern 9 (siehe Fig.2) beschickt werden. An einem vorder- oder frontseitigen Rand des Kochfelds 1 kann sich eine Nutzerschnittstelle 10 befinden.

**Fig.2** zeigt das Gargerät G als Schnittdarstellung in Vorderansicht mit einem von oben durch den Ausschnitt 7 in die Aufnahme 5 eingesetzten PEF-Behälter 9 bei teilgeöffnetem Deckel 8. Der PEF-Behälter 9 ist als ein obenseitig offener, schalenförmiger Behälter ausgebildet. Beispielsweise können zwei Seitenwandbereiche des PEF-Behälters 9 als gegeneinander elektrisch isolierte PEF-Elektroden 10a, 10b ausgebildet sein. Die PEF-Elektroden 10a, 10b sind an jeweilige Kontakte ("Gegenkontakte") 11a, 11b eines Steckverbindungselements ("Gegensteckverbindungselement") 11 angeschlossen. Bei eingesetztem PEF-Behälter 9 ist das Gegensteckverbindungselement 11 in ein Steckverbindungselement 12 der Aufnahme 5 eingesteckt, so dass die Gegenkontakte 11a, 11b jeweilige Kontakte ("Anschlusskontakte") 12a, 12b des Steckverbindungselements 12 elektrisch kontaktieren. Von den Anschlusskontakten 12a, 12b ist ein Anschlusskontakten 12a mit einem Signalausgang eines PEF-Generators 13 (siehe Fig.3) der PEF-Gareinrichtung 6 elektrisch verbunden, während der andere Anschlusskontakt 12b an Masse bzw. einem Bezugspotenzial liegt. Alternativ können das Steckverbindungselement 12 und Gegensteckverbindungselement 11 auch nur einen Anschlusskontakt 12a bzw. einen Gegenkontakt 11a aufweisen.

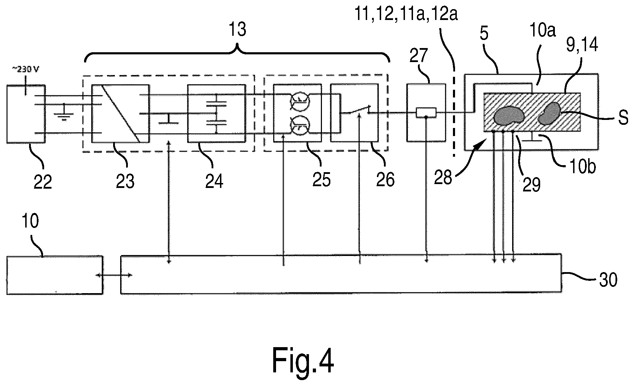

Der durch den PEF-Behälter 9 bereitgestellte freie Raum zwischen den PEF-Elektroden 10a, 10b bildet einen Garraum 14, der von einem Nutzer mit Gargut S (siehe Fig.4) beschickbar ist.

In einen Bereich eines Bodens der Aufnahme 5 mündet ein Ablauf 15 oder Ablaufkanal, der nach unten zu einem Auffangbehälter 16 führt. Aus einen PEF-Behälter 9 überlaufende Flüssigkeit und in der Aufnahme 5 kondensierter Wasserdampf und/oder Wrasen fließt durch den Ablauf 15 in den Auffangbehälter 16, der von einem Nutzer zur Entleerung und/oder Reinigung insbesondere entnehmbar ist.

**Fig.3** zeigt das Gargerät G als Schnittdarstellung in Seitenansicht. Neben der Aufnahme 5 befindet sich ein Raum zur Unterbringung zumindest einer Leistungselektronik 17 des PEF-Generators 13 ("Generatorraum" 18). Zudem weist das Gargerät G einen Lüfter 19 zu Kühlen der Leistungselektronik 17 auf, welcher hier ebenfalls in dem Generatorraum 18 untergebracht ist. Der Generatorraum 18 ist gegenüber der Aufnahme 5 gastechnisch offen (beispielsweise durch Vorsehen von Luftdurchlassöffnungen in einer Trennwand 20 zwischen Generatorraum 18 und Aufnahme 5. Bei Betrieb des Lüfters 19 wird kühle Luft L zunächst über die Leistungselektronik 17 geleitet und dann in die Aufnahme 5 eingeblasen. Sie kann folgend z.B. durch in dem Deckel 8 oder an einem Spalt zwischen Deckel 8 und dem oberseitigen Rand der Aufnahme 5 bzw. der Glaskeramikplatte 2 vorhandenen Dampfauslassöffnungen 21 nach oben austreten, wie durch die Pfeile angedeutet. Mit dem Austritt werden Wasserdampf und/oder Wrasen mitgenommen, so dass sie sich nicht im Gargerät G ausbreiten können.

**Fig.4** zeigt ein vereinfachtes Ersatzschaltbild einer Schaltung zur PEF-Behandlung von Gargut S mittels des PEF-Generators 13. Die Schaltung weist eine Stromversorgungeinheit 22 für den PEF-Generator 13 auf, die einen Störfilter aufweisen kann. Der PEF-Generator 13 weist einen Spannungsgenerator 23 auf, der ausgangsseitig mit einer Kondensatorbank 24 verbunden ist. Die Kondensatorbank 24 dient dazu, die von dem Spannungsgenerator 23 ausgegebene Spannung stabil zu halten. Die Kondensatorbank 24 ist ausgangsseitig mit einem Pulsgenerator 25 zur Erzeugung steilflankiger Spannungspulse verbunden. Der Pulsgenerator 25 wiederum ist ausgangsseitig über einen elektrisch schaltbaren Schalter 26 und einen Stromsensor und -begrenzer 27 mit dem Anschlusskontakt 12a der Aufnahme 5 verbunden. Bei eingesetztem PEF-Behälter 9 ist auch z.B. die PEF-Elektrode 10a über den Gegenkontakt 11a mit dem PEF-Generator 13 verbunden. Die andere PEF-Elektrode 10b, die wie die PEF-Elektrode 10a als Kondensatorplatte eines Kondensators dient, zwischen denen das Gargut S einbringbar ist, liegt auf Masse.

An der Aufnahme 5 können mehrere Sensoren 28 vorhanden sein, mittels derer sich z.B. eine Temperatur und/oder eine elektrische Leitfähigkeit in dem PEF-Behälter 9, eine Form der Spannungspulse und/oder Strompulse am Ort des Garguts S usw. erfassen lässt. Einer dieser Sensoren 28 ist ein Kontaktschalter 29, der zur Überwachung des Deckels 8 auf seinen geschlossenen Zustand dient.

Auch umfasst die Schaltung eine Steuerelektronik 30 zur Steuerung der Schaltung, beispielsweise zum Auswerten der Messsignale des Stromsensors 27, insbesondere auf Grundlage einer Auswertung der Messsignale des Stromsensors 27, zur Ansteuerung (z.B. Ein- und Ausschalten, zur Pulsformung usw.) und Überwachung (z.B. der Ausgangsspannungen) des PEF-Generators 13 sowie ggf. zur Ansteuerung der Nutzerschnittstelle 10 des Gargeräts 1. Insbesondere kann die Steuerelektronik 30 dazu eingerichtet sein, den PEF-Generator 13 nur dann zu betreiben, insbesondere zu bestromen, wenn über den Kontaktschalter 29 erkannt worden ist, dass sich der Deckel 8 in seinem geschlossenen Zustand befindet.

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Kochfeld
- 2: Glaskeramikplatte
- 3: Kochstelle
- 4: Energieübertragungseinheit
- 5: Aufnahme
- 6: PEF-Gareinrichtung
- 7: Ausschnitt
- 8: Deckel
- 9: PEF-Behälter
- 10: Nutzerschnittstelle
- 10a: PEF-Elektrode
- 10b: PEF-Elektrode
- 11: Gegensteckverbindungselement
- 11a: Gegenkontakt
- 11b: Gegenkontakt
- 12: Steckverbindungselement
- 12a: Anschlusskontakt
- 12b: Anschlusskontakt
- 13: PEF-Generator
- 14: Garraum
- 15: Ablauf
- 16: Auffangbehälter
- 17: Leistungselektronik
- 18: Generatorraum
- 19: Lüfter
- 20: Trennwand
- 21: Dampfauslassöffnung
- 22: Stromversorgungeinheit
- 23: Spannungsgenerator
- 24: Kondensatorbank
- 25: Pulsgenerator
- 26: Schalter
- 27: Stromsensor und -begrenzer
- 28: Sensor
- 29: Kontaktschalter
- 30: Steuerelektronik
- G: Gargerät
- L: Luft
- S: Gargut

## Patentansprüche

1. Gargerät (G), aufweisend ein Kochfeld (1) mit mindestens einer Energieübertragungseinheit (4) zum Übertragen von Energie zum Heizen eines auf dem Kochfeld (1) aufgesetzten Aufsatzgeräts und mit mindestens einer PEF-Gareinrichtung (6), wobei die mindestens eine PEF-Gareinrichtung (6) aufweist:
- mindestens einen PEF-Generator (13) und
- mindestens eine von einer Oberseite des Kochfelds (1) zugängliche Aufnahme (5), die zum Einsatz mindestens eines PEF-Behälters (9) eingerichtet ist,
wobei
- jede Aufnahme (5) mindestens einen Anschlusskontakt (12a) zur elektrischen Verbindung mit mindestens einem darin eingesetzten PEF-Behälter (9) aufweist

2. Gargerät (G) nach Anspruch 1, wobei mindestens ein Anschlusskontakt (12a) an den PEF-Generator (13) angeschlossen ist.

3. Gargerät (G) nach Anspruch 2, wobei mehrere Anschlusskontakte (12a, 12b) an den PEF-Generator (13) angeschlossen sind, insbesondere an unterschiedliche Signalausgänge des PEF-Generators (13).

4. Gargerät (G) nach einem der vorhergehenden Ansprüche, wobei mindestens ein Anschlusskontakt (12b) auf Masse liegt.

5. Gargerät (G) nach einem der vorhergehenden Ansprüche, wobei die Aufnahme (5) über einen Ablauf (15) mit einem Auffangbehälter (16) verbunden ist.

6. Gargerät (G) nach einem der vorhergehenden Ansprüche, wobei das Gargerät (G) mindestens einen Deckel (8) zur oberseitigen Abdeckung mindestens einer Aufnahme (5) aufweist und dazu eingerichtet ist, einen geschlossenen Zustand des Deckels (8) zu detektieren und den zugehörigen mindestens einen PEF-Generator (13) nur bei geschlossenem Deckel (8) zu aktivieren.

7. Gargerät (G) nach einem der vorhergehenden Ansprüche, wobei die Aufnahme (5) mit einer Wrasenabfuhreinrichtung (19) verbunden ist.

8. Gargerät (G) nach Anspruch 7, wobei die Wrasenabfuhreinrichtung (19) mindestens einen Lüfter (19) zum Einblasen von Luft in die Aufnahme (5) aufweist.

9. Gargerät (G) nach Anspruch 8, wobei in dem Deckel (8) und/oder in einem Spalt zwischen dem Deckel (8) und dem oberseitigen Rand der Aufnahme (5) mindestens eine Dampfauslassöffnung (21) vorhanden ist.

10. Gargerät (G) nach einem der Ansprüche 8 und 9, wobei mittels des Lüfters (19) zunächst Luft über eine Elektronik (17) und dann in die Aufnahme (5) einblasbar ist.

11. Gargerät (G) nach Anspruch 7, wobei die Wrasenabfuhreinrichtung mindestens einen Lüfter zum Absaugen von Wrasen aus der Aufnahme (5) aufweist.

12. Gargerät (G) nach einem der vorhergehenden Ansprüche, wobei eine Leistungselektronik (17) des mindestens einen PEF-Generators (13) zusammen mit einem Kühllüfter (19) zum Kühlen der Leistungselektronik in dem Gargerät (G) verbaut ist.

13. PEF-System (G, 9), aufweisend ein Gargerät (G) nach einem der vorhergehenden Ansprüche und mindestens einen zum Einsatz in eine Aufnahme (5) der PEF-Gareinrichtung (6) des Gargeräts (G) eingerichteten PEF-Behälter (9), wobei der PEF-Behälter (9) mindestens einen zu dem mindestens einen Anschlusskontakt (12a, 12b) der Aufnahme (5) passenden Gegenkontakt (11a) aufweist, der mit einer jeweiligen PEF-Elektrode (10a, 10b) des PEF-Behälters (9) elektrisch verbunden sind, und die PEF-Elektroden (10a, 10b) seitlich, insbesondere sich gegenüberliegend, eines Garraums (14) des PEF-Behälters (9) zur Unterbringung von Gargut (S) angeordnet sind.

14. Verfahren zum PEF-Behandeln von Lebensmitteln mittels eines Gargeräts (G) nach Anspruch 6, bei dem
- nach Aktivieren eines PEF-Garablaufs mittels des Gargeräts (G) überprüft wird, ob ein PEF-Behälter (9) in einer Aufnahme (5) eingesetzt ist und/oder der Deckel (8) der Aufnahme (5) geschlossen ist, und,
- falls dies der Fall ist, der PEF-Generator (13) zur Ausgabe von PEF-Signalen betrieben wird.

## Claims

1. Cooking appliance (G) comprising a hob (1) having at least one energy transmission unit (4) for transmitting energy in order to heat a place-on appliance placed on the hob (1) and having at least one PEF cooking apparatus (6), wherein the at least one PEF cooking apparatus (6) comprises:
- at least one PEF generator (13) and
- at least one receptacle (5), which is accessible from a top side of the hob (1) and is designed for the insertion of at least one PEF container (9),
wherein
- each receptacle (5) comprises at least one connection contact (12a) for electrically connecting to at least one PEF container (9) inserted in said receptacle.

2. Cooking appliance (G) according to claim 1, wherein at least one connection contact (12a) is connected to the PEF generator (13).

3. Cooking appliance (G) according to claim 2, wherein a plurality of connection contacts (12a, 12b) are connected to the PEF generator (13), in particular to different signal outputs of the PEF generator (13).

4. Cooking appliance (G) according to one of the preceding claims, wherein at least one connection contact (12b) is earthed.

5. Cooking appliance (G) according to one of the preceding claims, wherein the receptacle (5) is connected via a drain (15) to a collection container (16).

6. Cooking appliance (G) according to one of the preceding claims, wherein the cooking appliance (G) has at least one cover (8) for covering at least one receptacle (5) on the top side and is designed to detect a closed state of the cover (8) and to activate the associated at least one PEF generator (13) only when the cover (8) is closed.

7. Cooking appliance (G) according to one of the preceding claims, wherein the receptacle (5) is connected to a vapour removal apparatus (19).

8. Cooking appliance (G) according to claim 7, wherein the vapour removal apparatus (19) has at least one fan (19) for blowing air into the receptacle (5).

9. Cooking appliance (G) according to claim 8, wherein at least one steam outlet opening (21) is present in the cover (8) and/or in a gap between the cover (8) and the top-side edge of the receptacle (5).

10. Cooking appliance (G) according to one of claims 8 and 9, wherein air is able to be initially blown by means of the fan (19) over an electronics unit (17) and then into the receptacle (5).

11. Cooking appliance (G) according to claim 7, wherein the vapour removal apparatus has at least one fan for suctioning vapour out of the receptacle (5).

12. Cooking appliance (G) according to one of the preceding claims, wherein power electronics (17) of the at least one PEF generator (13), together with a cooling fan (19) for cooling the power electronics, are installed in the cooking appliance (G).

13. PEF system (G, 9) comprising a cooking appliance (G) according to one of the preceding claims and at least one PEF container (9) which is designed to be inserted into a receptacle (5) of the PEF cooking apparatus (6) of the cooking appliance (G), wherein the PEF container (9) has at least one mating contact (11a), which matches the at least one connection contact (12a, 12b) of the receptacle (5) and which is electrically connected to one respective PEF electrode (10a, 10b) of the PEF container (9), and the PEF electrodes (10a, 10b) are arranged to the side, in particular opposingly, relative to a cooking chamber (14) of the PEF container (9) for accommodating food to be cooked (S).

14. Method for the PEF treatment of food by means of a cooking appliance (G) according to claim 6, wherein
- after activating a PEF cooking sequence by means of the cooking appliance (G) it is monitored whether a PEF container (9) is inserted in a receptacle (5) and/or the cover (8) of the receptacle (5) is closed, and
- if this is the case, the PEF generator (13) is operated for the output of PEF signals.

## Revendications

1. Appareil de cuisson (G), comprenant une table de cuisson (1) comprenant au moins une unité de transmission d'énergie (4) pour transmettre de l'énergie pour chauffer un accessoire posé sur la table de cuisson (1) et au moins un dispositif de cuisson à champ électrique pulsé (PEF) (6),
dans lequel l'au moins un dispositif de cuisson à PEF (6) comprend :
- au moins un générateur de PEF (13), et
- au moins un réceptacle (5) accessible depuis un côté supérieur de la table de cuisson (1), qui est configuré pour y introduire au moins un récipient à PEF (9), dans lequel
- chaque réceptacle (5) comprend au moins un contact de connexion (12a) destiné à être connecté électriquement à au moins un récipient à PEF (9) introduit dans celui-ci.

2. Appareil de cuisson (G) selon la revendication 1, dans lequel au moins un contact de connexion (12a) est connecté au générateur de PEF (13).

3. Appareil de cuisson (G) selon la revendication 2, dans lequel plusieurs contacts de connexion (12a, 12b) sont connectés au générateur de PEF (13), en particulier à différentes sorties de signal du générateur de PEF (13).

4. Appareil de cuisson (G) selon l'une des revendications précédentes, dans lequel au moins un contact de connexion (12b) est à la masse.

5. Appareil de cuisson (G) selon l'une des revendications précédentes, dans lequel le réceptacle (5) est relié à un récipient de collecte (16) via un orifice de sortie (15).

6. Appareil de cuisson (G) selon l'une des revendications précédentes, dans lequel l'appareil de cuisson (G) comprend au moins un couvercle (8) pour recouvrir le côté supérieur d'au moins un réceptacle (5) et est configuré pour détecter un état fermé du couvercle (8) et activer l'au moins un générateur de PEF correspondant (13) uniquement lorsque le couvercle (8) est fermé.

7. Appareil de cuisson (G) selon l'une des revendications précédentes, dans lequel le réceptacle (5) est relié à un dispositif d'évacuation de fumées (19).

8. Appareil de cuisson (G) selon la revendication 7, dans lequel le dispositif d'évacuation de fumées (19) comprend au moins un ventilateur (19) pour insuffler de l'air dans le réceptacle (5).

9. Appareil de cuisson (G) selon la revendication 8, dans lequel au moins un orifice de sortie de vapeur (21) est présent dans le couvercle (8) et/ou dans une fente entre le couvercle (8) et le bord de côté supérieur du réceptacle (5).

10. Appareil de cuisson (G) selon l'une des revendications 8 et 9, dans lequel de l'air peut être insufflé au moyen du ventilateur (19) d'abord sur une électronique (17) et ensuite dans le réceptacle (5).

11. Appareil de cuisson (G) selon la revendication 7, dans lequel le dispositif d'évacuation de fumées comprend au moins un ventilateur pour aspirer les fumées à partir du réceptacle (5).

12. Appareil de cuisson (G) selon l'une des revendications précédentes, dans lequel une électronique de puissance (17) de l'au moins un générateur de PEF (13) est installée conjointement avec un ventilateur de refroidissement (19) destiné à refroidir l'électronique de puissance dans l'appareil de cuisson (G).

13. Système de PEF (G, 9), comprenant un appareil de cuisson (G) selon l'une des revendications précédentes et au moins un récipient à PEF (9) configuré pour être introduit dans un réceptacle (5) du dispositif de cuisson à PEF (6) de l'appareil de cuisson (G), dans lequel le récipient à PEF (9) comprend au moins un contre-contact (11a) adapté à l'au moins un contact de connexion (12a, 12b) du réceptacle (5), qui est (sont) connecté(s) électriquement à une électrode de PEF respective (10a, 10b) du récipient à PEF (9), et les électrodes de PEF (10a, 10b) sont disposées latéralement à, en particulier en se faisant face, un espace de cuisson (14) du récipient à PEF (9) servant à contenir une denrée alimentaire (S).

14. Procédé de traitement par PEF de denrées alimentaires au moyen d'un appareil de cuisson (G) selon la revendication 6, dans lequel :
- après activation d'un processus de cuisson par PEF au moyen de l'appareil de cuisson (G), il est surveillé, si un récipient à PEF (9) est introduit dans un réceptacle (5) et/ou le couvercle (8) du réceptacle (5) est fermé, et
- si tel est le cas, le générateur de PEF (13) est actionné pour délivrer des signaux de PEF.
